# EUROPEAN PATENT SPECIFICATION

(11) **EP 4 385 330 B1**
(45) Date of publication and mention of the grant of the patent: **30.09.2026**
(21) Application number: 22855487.9
(22) Date of filing: 11.08.2022
(51) Int. Cl.: A21C 11/20, A21C 1/06, A47J 43/04

(54) **NOODLE MAKING MACHINE**
NUDELMASCHINE
MACHINE DE FABRICATION DE NOUILLES

(30) Priority: 12.08.2021 CN 202121889947 U; 12.08.2021 CN 202121890780 U
(43) Date of publication of application: 19.06.2024
(73) Proprietor: Hangzhou Joyoug Small Household Appliances Company Limited, Hangzhou, Zhejiang 310018 (CN)
(72) Inventor: ZHU, Zechun, Hangzhou Economic And Technological Development Area Hangzhou, Zhejiang 310018 (CN); LUO, Gang, Hangzhou Economic And Technological Development Area Hangzhou, Zhejiang 310018 (CN); WANG, Zeyu, Hangzhou Economic And Technological Development Area Hangzhou, Zhejiang 310018 (CN); LIANG, Jiawen, Hangzhou Economic And Technological Development Area Hangzhou, Zhejiang 310018 (CN); TANG, Feng, Hangzhou Economic And Technological Development Area Hangzhou, Zhejiang 310018 (CN)
(74) Representative: advotec.
(86) International application number: PCT/CN2022/111622
(87) International publication number: WO 2023/016507

(56) References cited:
- CN-U- 205 727 845
- CN-U- 205 727 845
- CN-U- 206 559 970
- CN-U- 206 559 970
- CN-U- 206 559 971
- CN-U- 206 559 971
- CN-U- 210 538 524
- CN-U- 210 538 524
- CN-U- 215 684 520
- CN-U- 215 684 521
- US-A1- 2020 008 432

## Description

### FIELD

The present application relates to the technical field of food processing, and in particular to a pasta maker.

### BACKGROUND

With the improvement of living standards and the development of technology, more and more household food processors have come into people's kitchen, freeing people's hands, where the emergence of household pasta makers is one of the typical representatives.

At present, a pasta maker generally includes a base, a processing chamber that is mounted onto the base, where a kneading rod and an extrusion screw rod that are arranged in the processing chamber. One end of the extrusion screw rod, that is, the pasta outlet end of the extrusion screw rod is connected with a die head assembly, where the die head assembly includes a pasta form insert provided with a pasta outlet hole, and a die support fitting with the pasta form insert. In a case that the pasta form insert and the die support are integrated into an integrated die, if a user neglects to install the integrated die and the pasta maker is started, the extrusion screw rod is exposed and is in a transmission state. At this time, if the user touches the extrusion screw rod, a machinery risk will arise and the physical safety of the user will be affected. In a case that the pasta form insert and the die support are detachable and at least one of them is neglected for installation, once the user starts the pasta maker, there will be the machinery risk, and the physical safety of the user will be affected.

In order to solve the above safety problems, applicant has conducted relevant studies a few years ago, and disclosed an earlier application No. CN201720114142.X, which protects a safe pasta maker, where a through hole, into which a front end of the screw rod can move when the pasta form insert is not installed in place, is provided on a base wall of the die support, and a cover body for covering the through hole is arranged at a front end of the pasta form insert, such that if the user forgets to install the pasta form insert and the pasta maker is started, since the base wall of the die support is provided with the through hole, the front end of the screw rod can pass through the through hole, while a rear end of the screw rod is not in transmission relation with a motor, i.e. the screw rod is unable to rotate, so that the safety of the pasta maker in use is improved. However, in this solution, the cover body is formed by an upward extension of the front end of the pasta form insert, requiring multiple times of demolding for the integral structure of the cover body and the pasta form insert, resulting in great difficulty in demolding, thereby affecting the batch production of the whole die head assembly. Furthermore, since there is a large pressure in an outward direction along the axis of the extrusion screw rod when extruding pasta, the strength of the cover body is required to be large enough against the pressure from the extrusion screw rod. However, in the structure where the cover body and the pasta form insert are integrated, the cover body has a small thickness for smooth demolding, resulting in low strength. In this case, when the extrusion screw rod is making pasta from tight dough, the cover body is very likely to crack or be damaged because it is unable to bear the axial pressure from the extrusion screw rod, which makes the whole die head assembly fail.

In view of this, applicant makes further technical improvements, to not only ensure the using safety for the user, but also solve the problems that the demolding of the die head assembly is difficult, the process thereof is complicated, and that the die head assembly is apt to crack and be damaged.

CN 210 538 524 U discloses a safe pasta machine including a base, a mixing assembly, an extrusion assembly mounted on the base, and a motor inside the base. The mixing assembly includes a mixing cup, and a mixing rod disposed within the mixing cup. The mixing rod includes a rod body and a rod shaft. The extrusion assembly includes an extrusion cylinder, a screw horizontally disposed within the extrusion cylinder, and a die head assembly disposed at the front end of the extrusion cylinder. The die head assembly includes a die head support and a die head. The die head includes a form insert that cooperates with the die head support to produce noodles or dough sheets. The die head support is provided with a mounting part for mounting the die head. The mounting part is provided with a through hole disposed at the end of the die head support. The die head includes an end face connected to the form insert. The end face is installed at the through hole and positions the screw. A pop-out device is provided between the motor output shaft and the screw shaft of the screw. When the die head is not mounted, the pop-out device will pop the screw out axially.

### SUMMARY

The object of the present application is to solve at least one of above technical problems. A pasta maker is provided according to the present application, so as to not only ensure the using safety of a user, but also make the die head assembly easy to be demolded and processed, and improve the structural strength of the die head assembly to prevent it from cracking or being damaged, so that the service life of the die head assembly is increased.

In order to solve the above technical problems, a pasta maker is provided according to the present application, including a base that is provided with a motor, a processing chamber that is mounted on the base, and an ejection component, where
an extrusion screw rod and a stirring rod are arranged in the processing chamber, and a die head assembly is arranged at a front end of the extrusion screw rod;
the die head assembly includes a pasta form insert provided with pasta outlet holes, an end cover and a die support, where the end cover and the pasta form insert are two independent components, a front end of the pasta form insert is bent to form a bend portion, and the pasta form insert is mounted to the end cover via the bend portion;
an end portion of the die support is provided with a first through hole, and the first through hole is covered when the bend portion and the end cover are assembled; and
the bend portion is provided with a second through hole;
along an axial direction of the second through hole, an outer edge of the second through hole is located inside an outer edge of the first through hole, and a diameter of the second through hole is greater than or equal to a size of the front end of the extrusion screw rod;
the end cover is inserted into the second through hole along the axial direction to block the
second through hole, to mount the end cover to the bend portion; and
the ejection component is located between the output shaft of the motor and the extrusion screw rod or between the stirring rod and the extrusion screw rod; in a case that any one of the pasta form insert and the end cover is neglected to be mounted, the extrusion screw rod sticks out from the first through hole under an acting force of the ejection component, to be in a non-transmission state.

Further, an axial cross-sectional area of an outer profile of the end cover is less than an area of the first through hole, the area of the first through hole is less than an area of an outer edge of the bend portion, and the end cover is located on the bend portion.

Further,
in a case that the end cover and the bend portion are configured to be detachably connected and the end cover is neglected to be mounted, the extrusion screw rod sticks out from the first through hole through the second through hole, to be in the non-transmission state.

Further, the end cover is provided with an insertion rod extending along an axial direction of the extrusion screw rod, an outer side wall of the insertion rod or an inner wall of the second through hole is provided with a reinforcing rib, and the end cover is inserted into the second through hole via the insertion rod.

Further, the extrusion screw rod, the end cover, the bend portion and the first through hole are located on a same central axis.

Further, along the axial direction of the extrusion screw rod, an overlap region is formed by partial overlap between the end cover and the bend portion, and the end cover and the bend portion are fixedly connected via the overlap region.

Further, the overlap region includes a first overlap surface located on the bend portion and a second overlap surface located on the end cover, where any one of the first overlap surface and the second overlap surface is provided with an ultrasonic wire, and the first overlap surface and the second overlap surface are undetachably fixed by ultrasonic welding via the ultrasonic wire.

Further, a front end of the die support is provided with an annular end face surrounding the first through hole, and when the die head assembly is mounted in place, the bend portion is located in an inner channel of the die support, and the bend portion axially abuts against the annular end face.

Further, the pasta maker further includes two or more pasta form inserts, and the end cover is configured to fit any of the pasta form inserts.

Further, the pasta maker further includes a receiving chamber where the ejection component is mounted, where
one end of the receiving chamber close to the ejection component is sealed, and the other end of the receiving chamber away from the ejection component is open;
a stopping member configured for limiting the ejection component within the receiving chamber, and a stepped shaft hole are provided in the receiving chamber, where the stepped shaft hole includes a through hole of the stopping member and a transmission shaft hole being located at an opening of the receiving chamber and is in communication with the through hole of the stopping member; and
in a transmission state, the stirring rod or the extrusion screw rod is inserted into the through hole of the stopping member.

Further, the ejection component includes a resilient member and a pushing member having a pushing segment, where the stopping member is provided in the receiving chamber, the pushing segment is arranged through the through hole of the stopping member, and the pushing segment is radially limited by the stopping member; and a ratio of an axial length of the stopping member to an axial length of the pushing segment is L, where 0.4≤L≤1.

Further, the ejection component includes a resilient member and a pushing member having a pushing segment, the extrusion screw rod or the stirring rod further includes a stepped shaft segment fitting the stepped shaft hole, and the stepped shaft segment includes a first shaft segment and a second shaft segment, where
the first shaft segment and the through hole of the stopping member are fitted by insertion, and the second shaft segment and the transmission shaft hole are fitted by insertion; and
a pushing stroke of the pushing member is greater than or equal to an axial length of the transmission shaft hole, and an axial length of the second shaft segment is greater than or equal to an axial length of the first shaft segment.

Further, the stirring rod, which is arranged in the processing chamber, is connected with the extrusion screw rod by mutual insertion, the receiving chamber is located in the stirring rod or the extrusion screw rod, and the stopping member protrudes with respect to an inner wall of the receiving chamber such that the stepped shaft hole is formed in the receiving chamber.

The beneficial effects of the present application are as follows.
1. According to the present application, in order to prevent the accidents that, in a case that any component of the die head assembly is neglected to be mounted, when the user accidentally presses a switch, the extrusion screw rod is exposed and in an engagement state, and the transmission is realized, causing the safety of the user being harmed, the first through hole is provided on the end portion of the die support according to the present application, and the first through hole is covered when the bend portion and the end cover are assembled; if the pasta form insert and/or the end cover is neglected to be mounted, the extrusion screw rod sticks out from the first through hole under the acting force of the ejection component, to be in a non-transmission state. That is to say, according to this solution, when the end cover is neglected to be mounted, after the pasta form insert is in fit with the die support, the bend portion still cannot cover the first through hole, such that the extrusion screw rod can still stick out from the first through hole; when the pasta form insert is neglected to be mounted, the end cover is not able to be in fit with the die support, which makes the first through hole completely exposed, so that the extrusion screw rod is easy to get into the non-transmission state; and when only the die support is mounted, the first through hole is completely exposed as well, so that the extrusion screw rod is easy to get into the non-transmission state, thereby improving the using safety of the user.
   Moreover, based on ensuring the using safety of the user, in order to facilitate the demolding and make the processing of the die head assembly more convenient, the front end of the pasta form insert is bent to form the bend portion, and the pasta form insert is mounted to the end cover via the bend portion. In this way, during processing, the pasta form insert and the end cover are two independent individual parts; the two independent individual parts only require demolding in a single direction, which facilitate shaping and processing.
2. The bend portion is provided with the second through hole, which not only makes it easy to mount the end cover with the bend portion via the second through hole, to block the second through hole by the end cover, but also reduces the cost for manufacturing the bend portion. The outer edge of the second through hole is located in the outer edge of the first through hole, and the diameter of the second through hole is not less than the size of the front end of the extrusion screw rod. When the end cover and the bend portion are configured to be detachably connected and the end cover is neglected to be mounted, the extrusion screw rod can stick out from the first through hole through the second through hole to get into a non-transmission state, such that the safety of the user is ensured. It may be appreciated that, when the end cover and the die support are neglected to be mounted, the extrusion screw rod can stick out from the second through hole to get into a non-transmission state.
3. The second through hole is provided on the bend portion, and the end cover is inserted into the second through hole along the axial direction to block the second through hole, such that the end cover is reliably mounted to the bend portion. This way of mounting not only is convenient, but also makes the end cover and the bend portion to form an end surface together as the end cover blocks the second through hole, such that leaking of the dough pieces from the second through hole is reduced, which leads to a good sealing performance. Furthermore, the diameter of the second through hole is not less than the size of the front end of the extrusion screw rod, such that when the end cover and the die support are both neglected to be mounted, the extrusion screw rod can stick out from the second through hole to get into a non-transmission state, to make the extrusion screw rod unable to rotate. Or, when only the end cover is neglected to be mounted, the extrusion screw rod can stick out from both the first through hole and the second through hole to get into a non-transmission state. In this way, the using safety of the user is further improved, while a using instruction is provided to the user to some extent, and the user is warned not to neglect to mount the pasta form insert and the end cover next time.
4. Based on ensuring that whenever any component in the die head assembly is neglected to be mounted, the extrusion screw rod can be ejected into the non-transmission state to achieve safe usage, in order to improve the smoothness of ejection of the extrusion screw rod, according to the present application, the ejection component includes the pushing member having the pushing segment, the stopping member is arranged in the receiving chamber, the pushing segment is arranged through the through hole of the stopping member, and the pushing segment is radially limited by the stopping member. That is to say, the stopping member forms a radial limit to the pushing segment, to reduce a radial deflection of the pushing segment, such that when pushing is performed, the pushing segment is on the same axis as the processing assembly being pushed. In this way, when any component in the die head assembly is neglected to be mounted, the radial deflection of the pushing member of the ejection component is effectively reduced, and the pushing member more effectively pushes the extrusion screw rod out along the axial direction, to make the extrusion screw rod be in the non-transmission state.

Moreover, when the pushing segment pushes the extrusion screw rod out, the longer the portion, which is beyond an end surface of the stopping member, of the pushing segment is, the easier the portion, which is beyond the end surface of the stopping member, of the pushing segment radially deflects due to the absence of a radially limiting structure. In view of this, the ratio of the axial length of the stopping member to the axial length of the pushing segment is further configured to be L, where 0.4≤L≤1. Therefore, it can be ensured that, when L ranges from 0.5 to 1, the portion, which is beyond the end surface of the stopping member, of the pushing segment is at most half of the total length of the pushing segment, and the center of gravity of the pushing segment is always located at the stopping member, i.e. the center of gravity of the pushing member is always located at the stopping member, which can effectively reduce the deflection of the pushing segment of the pushing member, and especially effectively reduce the deflection of the portion, which is beyond the end surface of the stopping member, of the pushing segment; in a case that L ranges from 0.4 to 0.5, in one aspect, the center of gravity of the pushing segment is very close to the stopping member, thus subtle radial deflection of the pushing segment can hardly affect the extrusion screw rod being pushed out; in another aspect, on the premise that the pushing stroke of the pushing member keeps the same, the total length of the pushing segment can be reduced to prevent the pushing member from being broken and damaged during transportation. With the deflection being reduced, the pushing member pushes the extrusion screw rod out more stably, and a minimal pushing force is needed, which can prevent the pushing member from being bent or broken.

### BRIEF DESCRIPTION OF THE DRAWINGS

FIG. 1 is a schematic view showing the structure of a pasta maker according to an embodiment of the present application;
FIG. 2 is a sectional view showing a pasta maker according to an embodiment of the present application;
FIG. 3 is a partially enlarged view showing a portion A in FIG. 2;
FIG. 4 is a sectional view showing another pasta maker according to an embodiment of the present application;
FIG. 5 is an exploded view showing a die head assembly according to an embodiment of the present application;
FIG. 6 is a side view showing a pasta form insert according to an embodiment of the present application;
FIG. 7 is a side view showing a die support according to an embodiment of the present application;
FIG. 8 is a side view showing an end cover according to an embodiment of the present application;
FIG. 9 is a schematic view showing the structure of a die head assembly according to an embodiment of the present application;
FIG. 10 is a schematic view showing the structure of another die head assembly according to an embodiment of the present application;
FIG. 11 is an exploded view showing the die head assembly in FIG. 10;
FIG. 12 is a sectional view showing a processing chamber and a processing assembly when a die head assembly is mounted in place according to an embodiment of the present application;
FIG. 13 is a partially enlarged view showing a portion A1 in FIG. 12;
FIG. 14 is a sectional view showing a processing chamber and a processing assembly when a die head assembly is neglected to be mounted according to an embodiment of the present application;
FIG. 15 is a partially enlarged view showing a portion B in FIG. 4;
FIG. 16 is an exploded view showing a stirring rod, an ejection component, a first seal ring, and a stopping member according to an embodiment of the present application;
FIG. 17 is a front view showing a pushing member according to an embodiment of the present application;
FIG. 18 is a schematic view showing the three-dimensional structure of a pushing member according to an embodiment of the present application; and
FIG. 19 is a schematic view showing the structure of an extrusion screw rod according to an embodiment of the present application.

Reference numerals corresponding to components in the drawings are as follows:

| | | | |
|---|---|---|---|
| 1 | base, | 11 | motor, |
| 2 | processing chamber, | 21 | stirring chamber, |
| 211 | stirring rod, | 22 | extrusion chamber, |
| 221 | extrusion screw rod, | 2211 | fitting portion, |
| 3 | die head assembly, | 31 | pasta form insert, |
| 311 | pasta outlet hole, | 312 | bend portion, |
| 3121 | positioning ring, | 313 | second through hole, |
| 32 | end cover, | 321 | mounting portion, |
| 322 | positioning rod, | 3221 | reinforcing rib, |
| 323 | ultrasonic wire, | 33 | die support, |
| 331 | annular end face, | 332 | first through hole, |
| 4 | die cover, | 41 | receiving chamber, |
| 42 | stopping member, | 43 | stepped shaft hole, |
| 431 | through hole of stopping member, | 432 | transmission shaft hole, |
| 44 | stepped shaft segment, | 441 | first shaft segment, |
| 442 | second shaft segment, | 5 | ejection component, |
| 51 | resilient member, | 52 | pushing member, |
| 521 | pushing segment, | 522 | limiting portion, |
| 523 | clamping member, | 53 | stopping cap, |
| 54 | seal ring, | 541 | first seal ring, |
| 542 | second seal ring, | 55 | snap ring, |
| 56 | limiting step, | 57 | clamping groove, |
| 6 | overlap region, | 61 | first overlap surface, |
| 62 | second overlap surface. | | |

### DETAILED DESCRIPTION OF THE EMBODIMENTS

The present application will be further described in detail in conjunction with drawings and specific embodiments hereinafter. It should be appreciated that, the embodiments only represent possible variations; unless specifically required, individual components and functions can be selected. In this application, terms "include", "comprise" or any other variations are intended to cover non-exclusive "include", thus a process, a method or a device including a series of factors not only include the listed factors, but also include other factors not explicitly listed. The embodiments of the present application will be described in detail as follows in conjunction with the accompany drawings, so that purposes, technical solutions and advantages of the embodiments of the present application can be clearer. It should be noted that, in the case of no conflict, the embodiments and features in the embodiments in the present application can be combined arbitrarily with each other.

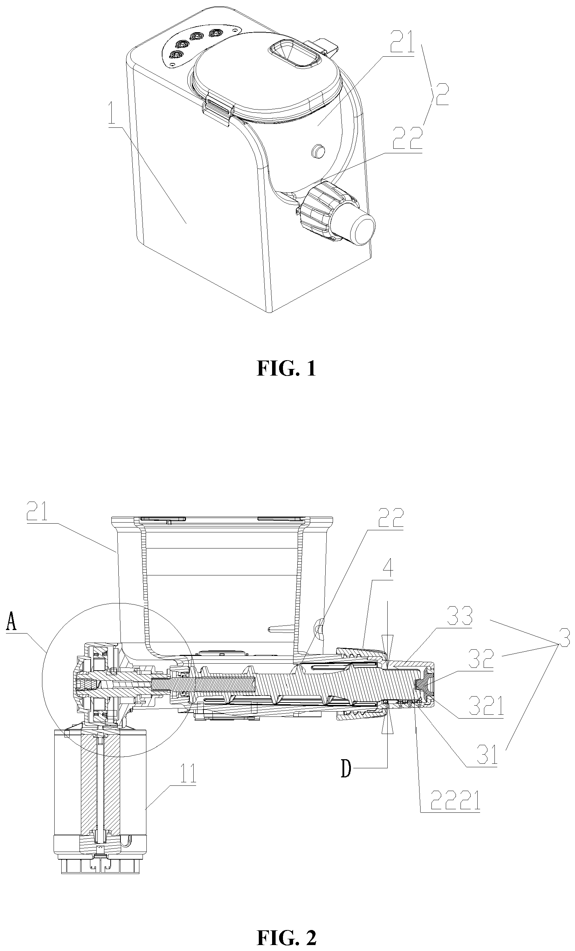

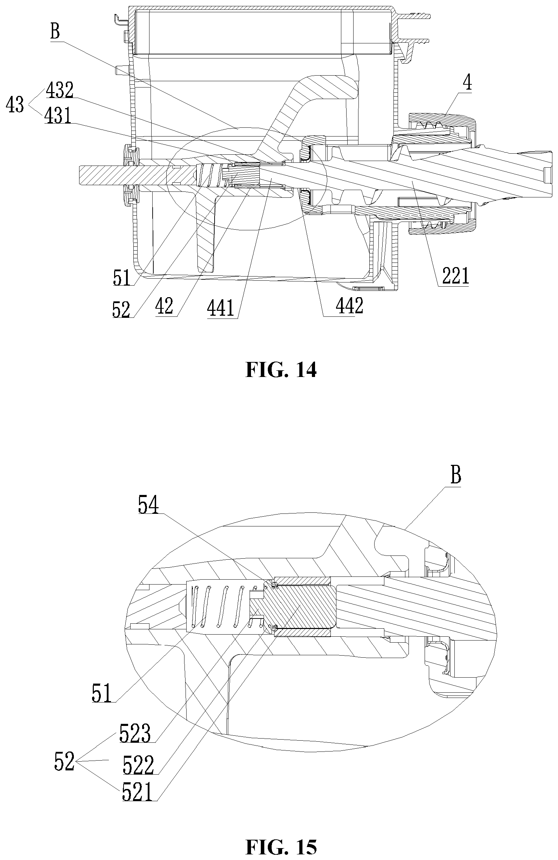

A pasta maker is provided according to the present application. As shown in FIGS. 1 to 19, the pasta maker includes a base 1 provided with a motor 11, a processing chamber 2 mounted onto the base 1, an extrusion screw rod 221 and a stirring rod 211 that are arranged in the processing chamber 2, and a die head assembly 3 arranged at a front end of the extrusion screw rod 221. According to the present invention the processing chamber 2 includes a stirring chamber 21 in which the stirring rod is arranged, and an extrusion chamber 22 in which the extrusion screw rod 221 is arranged, and the die head assembly 3 is mounted to a front end of the extrusion chamber 22 via a die cover 4. The die head assembly 3 includes a pasta form insert 31 provided with pasta outlet holes 311. Flour and water are fed into the stirring chamber 21 and are stirred by the stirring rod; after being stirred, dough pieces or small doughs enter the extrusion chamber 22 to be extruded from the pasta outlet holes 311 of the pasta form insert 31 by the extrusion screw rod 221 to form pasta. It should be noted that, the direction of the stirring rod, and whether the stirring rod and the extrusion screw rod 221 are horizontally arranged in an integrated manner or in a separated manner, are not specifically limited in the present application.

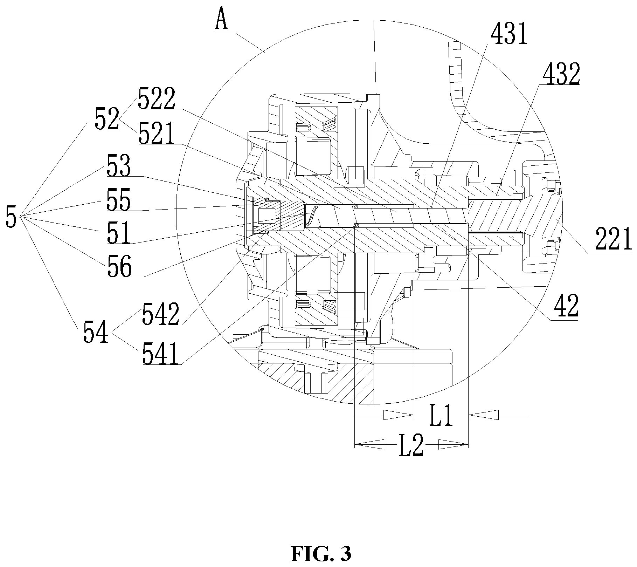

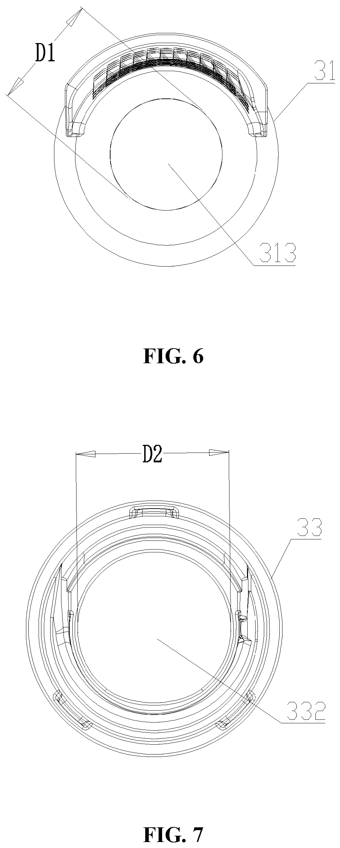

In an embodiment of the present application, as shown in FIG. 3, the pasta maker further includes an ejection component 5, which is configured to eject the extrusion screw rod 221 out into a non-transmission state in a case that any component of the die head assembly 3 is neglected to be mounted. The die head assembly 3 includes the pasta form insert 31 provided with the pasta outlet holes 311, an end cover 32 and a die support 33. In this embodiment, a first through hole 332 is provided at an end portion of the die support 33, and the first through hole 332 is covered by the end cover 32 and a bend portion 312 provided on the pasta form insert 31. In a specific solution, the bend portion 312 is provided at a front end of the pasta form insert 31 along an axial direction of the extrusion screw rod. That is to say, only when the bend portion 312 and the end cover 32 are assembled together can the first through hole 332 be covered, where the bend portion 312 and the end cover 32 are both indispensable. Moreover, in order to prevent the accidents that, in a case that any component of the die head assembly 3 is neglected to be mounted, when a user accidentally presses a switch, the extrusion screw rod 221 is exposed and in an engagement state, and the transmission is realized, causing the safety of the user being harmed, according to the present application, in a case that any of the pasta form insert 31 and the end cover 32 is neglected to be mounted, the extrusion screw rod 221 is able to stick out from the first through hole 332 under an acting force of the ejection component 5 to get into a non-transmission state; in a case that the die support 33 is neglected to be mounted, the pasta form insert 31 and/or the end cover 32 are not able to be mounted at the front end of the extrusion screw rod 221, thus the extrusion screw rod 221 is in the non-transmission state. Specifically, as shown in FIG. 2, where the extrusion screw rod has a diameter D, and as shown in FIG. 7 which is a side view of the die support 33, where the first through hole 332 has a diameter D2, D≤D2, such that when the first through hole 332 is not covered, the front end of the extrusion screw rod 221 can easily stick out from the first through hole 332, to get out of engagement, to be in the non-transmission state. In this way, in one aspect, only the bend portion 312 or only the end cover 32 cannot completely cover the first through hole 332; in another aspect, the extrusion screw rod 221 can be in the engagement state to realize transmission if and only if none of the components of the die head assembly 3 is neglected to be mounted and all of the components are mounted in place, which improves the using safety of the user.

It should be noted that, a case that, when both the pasta form insert 31 and the end cover 32 are neglected to be mounted, the extrusion screw rod 221 sticks out from the first through hole 332 under an acting force of the ejection component 5 into the non-transmission state, is also included in the present application. Whether the assembly of the bend portion 312 and the end cover 32 is detachable or undetachable for the user is not limited herein.

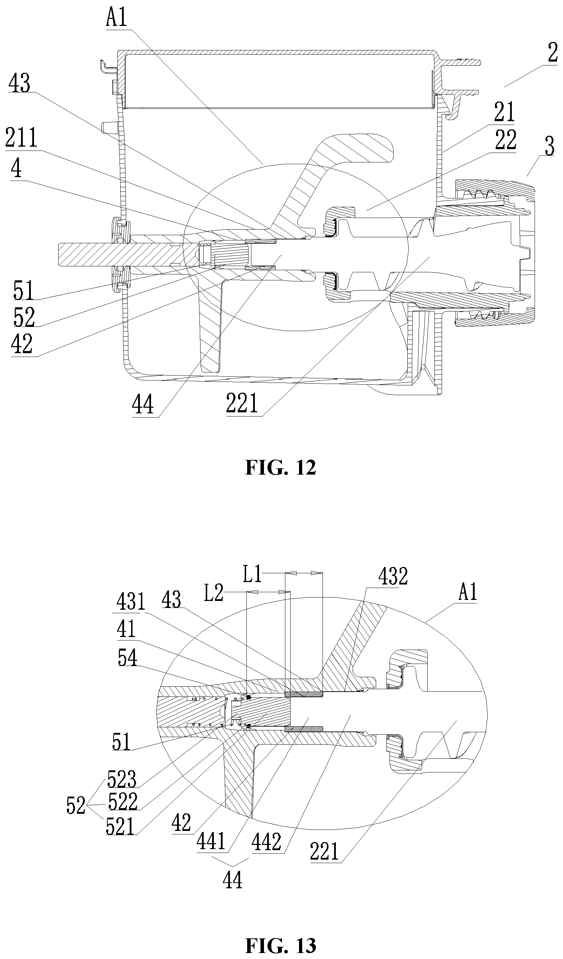

It should be noted that, the extrusion screw rod is ejected under the ejecting effect of the ejection component 5 when any component in the die head assembly is neglected to be mounted, to get into the non-transmission state. Specific structure and position arrangement of the ejection component are not limited in the present embodiment. For example, as shown in FIGS. 2 and 3, when the extrusion screw rod 221 is horizontally arranged and is in transmission fit with an output shaft of the motor 11, the ejection component 5 is located between the output shaft of the motor and the extrusion screw rod. In the embodiment not covered by the present invention, when the extrusion screw rod 221 and the
stirring rod are formed into a one-piece structure, the extrusion screw rod 221 is connected to the output shaft of the motor 22 via the stirring rod 211, and the ejection component 5 is located between the output shaft of the motor 11 and the stirring rod 211. Referring to FIG. 12, when the extrusion screw rod 221 and the stirring rod 211 are coaxially and horizontally arranged in a detachable manner, the ejection component 5 may be located between the stirring rod 211 and the extrusion screw rod 221, or may be located between the output shaft of the motor 11 and the stirring rod 211.

Further, on the premise of ensuring the using safety of the user, in order to further improve the facilitate the demolding and make the processing of the die head assembly more convenient, in the present embodiment, the front end of the pasta form insert 31 is bent to form the bend portion 312, and the pasta form insert 31 is fixedly connected to the end cover 32 via the bend portion 312. It should be noted that, "the pasta form insert 31 is mounted to the end cover 32 via the bend portion 312" includes a case where the pasta form insert and the end cover are undetachable for the user but detachable for an assembly worker, and also a case where the pasta form insert and the end cover are detachable for both the user and the assembly worker, while the only certainty is that the end cover 32 and the pasta form insert 31 are two independent components that can be reliably mounted only by fixed connection. In this way, the pasta form insert 31 and the end cover 32 are according to the present invention two independent individuals during processing, and the two independent individuals only require demolding in a single direction, which facilitates shaping and processing.

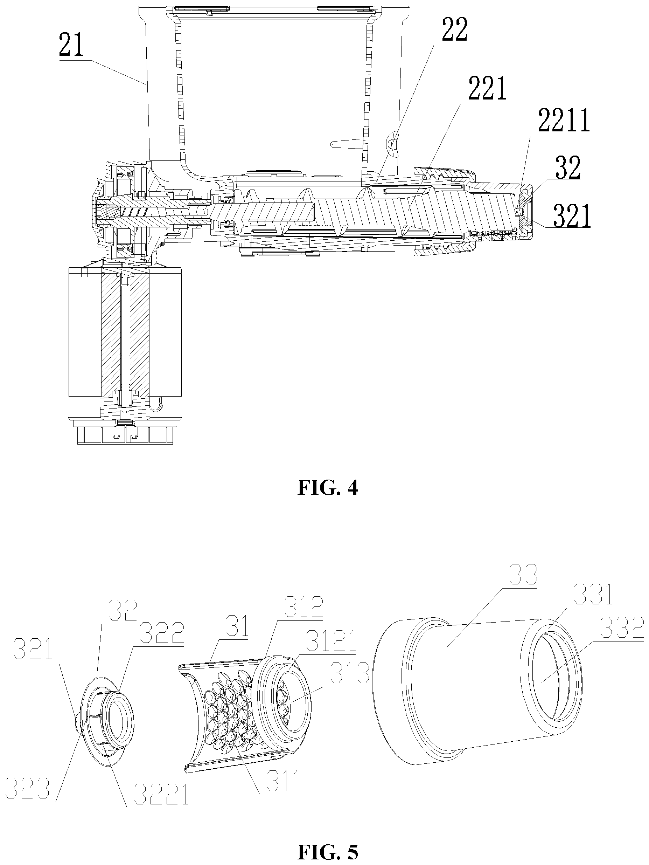

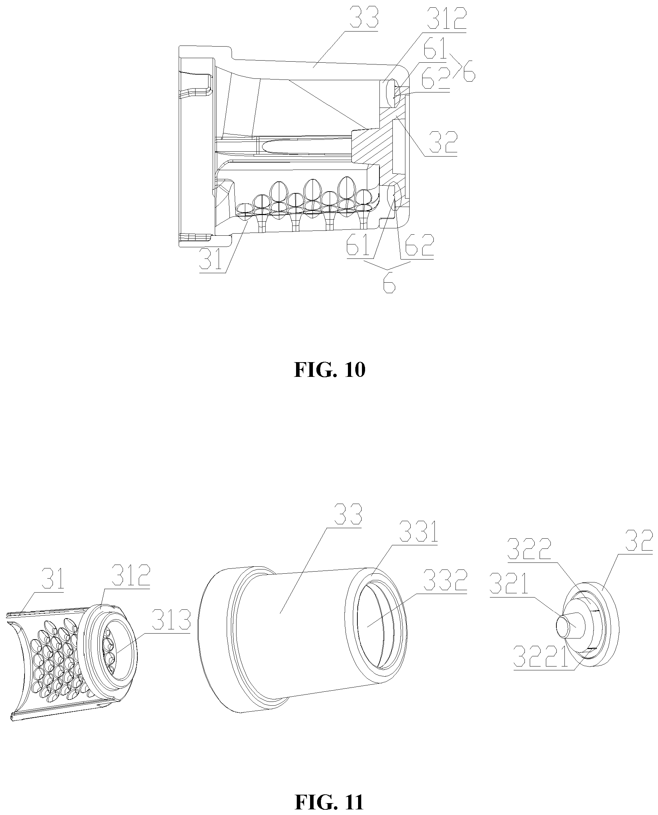

Further, as shown in FIGS. 5 and 11, in the present solution, the bend portion 312 is configured to be a plate-like structure formed by the front end of the pasta form insert 31 being bent to a right angle and extended integrally, and a second through hole 313 is provided in the plate-like structure. In one aspect, the bend of the right angle is easier for processing compared to the bend of an acute angle or an obtuse angle; in another aspect, the bend portion 312 of the plate-like structure can fit more tightly with the die support 33 to prevent flour leakage.

In some embodiments of the present application, the extrusion screw rod 221, the end cover 32, the bend portion 312 and the first through hole 332 are located on a same central axis. In this way, in a case that any component of the die head assembly 3 is neglected to be mounted, the ejection component 5 can eject the extrusion screw rod 221 along the same central axis, which can effectively prevent the extrusion screw rod 221 from being stuck with other components.

According to the present invention as shown in FIGS. 2 and 3, the ejection component 5 is located between the output shaft of the motor 11 and the extrusion screw rod 221. Specifically, the ejection component 5 is located in an output shaft hole of the motor 11, and a fitting shaft located at a tail portion of the extrusion screw rod 221 is inserted into the output shaft hole of the motor for engagement, to realize the transmission state. The ejection component 5 includes a pushing member 52, a resilient member 51 for pushing the pushing member 52, where one end of the resilient member 51 abuts against the pushing member 52, while the pushing member 52 is not inserted inside the resilient member 51; and the other end of the resilient member 51 is connected to a stopping cap 53 at a bottom of the output shaft hole. If any component of the die head assembly 3 is neglected to be mounted, the pushing member 52 can push the extrusion screw rod 221 out of the shaft hole by the resilient member 51, such that the extrusion screw rod 221 is out of engagement with the output shaft hole of the motor 11, to be in the non-transmission state; or, when the die head assembly 3 is mounted in place, the tail portion of the extrusion screw rod 221 is pushed into the output shaft hole of the motor 11 by the pushing of the end cover 32 to the front end of the extrusion screw rod 221, at which time the pushing member 52 pushes the resilient member 51 such that the resilient member 51 is compressed. Specifically, the resilient member 51 may be a component that has the ability of resilience, such as a spring, a soft robber pad or the like.

Further, in the present solution, in order to ensure the reliability of an axial limit to the resilient member 51 by the stopping cap 53, a tail portion of the stopping cap 53 is fixed by a snap ring 55, where the snap ring 55 is clamped at a tail portion of the output shaft hole, and the stopping cap 53 abuts against the resilient member 51 in the axial direction.

To prevent a lubricant of the resilient member 51 from leaking from a gap between the stopping cap 53 and an inner wall of the shaft hole of the motor, a seal ring 54 is arranged between the stopping cap 53 and the inner wall of the output shaft hole of the motor 11. Preferably, the seal ring 54 is an annular silicone ring.

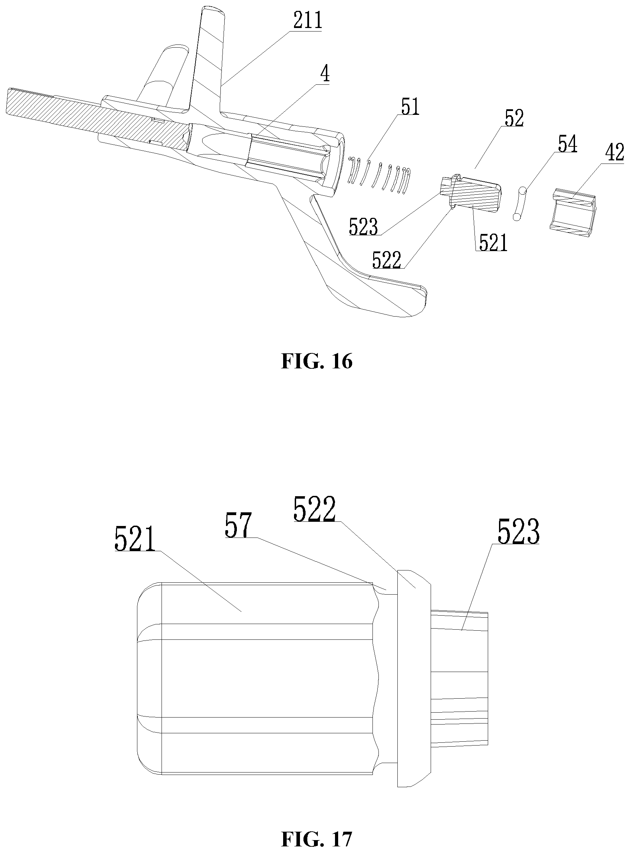

Further, in some embodiments of the present application, referring to FIG. 3, a seal ring 54 is arranged in a receiving chamber 41, where the seal ring 54 includes a first seal ring 541. The pushing member 52 includes a pushing segment 521 and a limiting portion 522 configured to prevent the pushing segment 521 from being ejected from a through hole 431 of a stopping member; and the first seal ring 541 is clamped at an end of the pushing segment 521 away from the stopping member. As shown in FIG. 17, a clamping groove 57 is provided between the pushing segment 521 and the limiting portion 522, and the first seal ring 541 is clamped in the clamping groove 57 to be fixed onto the pushing member 52. As the water stain is hard to be removed after water comes into a portion receiving the resilient member 51, the portion receiving the resilient member 51 will stink after a long time, which affects the user experience. If the resilient member 51 is made of metals, such as a spring, a magnet or the like, the metallic resilient member 51 is apt to rust, and the ejection force may be reduced. Furthermore, without a waterproof structure, when making flour food, flour and/or water will get to the portion receiving the resilient member 51 and adhere to the resilient member 51, which will significantly reduce the resilient force or the repulsive force thereof, such that the ejection effect on the extrusion screw rod 221 is affected. In view of this, the first seal ring 541 clamped at an end of the pushing segment 521 away from the stopping member is provided according to the present solution.

According to a preferred solution, a cross-sectional area of an outer profile of the end cover 32 is less than an area of the first through hole 332; and the area of the first through hole 332 is less than an area of an outer edge of the bend portion 312. In this way, the outer edge of the bend portion 312 can cover an outer edge of the first through hole 332, and the end cover is mounted inside the bend portion 312, such that the bend portion 312 becomes a core member for covering the first through hole 332 and mounting the end cover 32. Specifically, the end cover 32 and the bend portion 312 of the pasta form insert 31 are connected detachably for the user, to ensure that if any component of the die head assembly 3 is neglected to be mounted by the user, the extrusion screw rod 221 is always out of engagement and in the non-transmission state whether the remaining components can be mounted at the front end of the extrusion screw rod 221 or not, such that the using safety of the user is improved. In the present embodiment, a radial size of the end cover 32 is less than a radial size of the first through hole 332, such that the end cover 32 is not able to be solely mounted onto the die support 33 without the pasta form insert 1. It can be appreciated that, if the end cover 32 is able to be solely mounted onto the die support 33, when the pasta form insert 31 is neglected to be mounted, the extrusion screw rod 221 cannot stick out from the first through hole 332 of the die support 33, and transmission can be realized by the extrusion screw rod 221. Therefore, with the arrangement in the present solution, only if the pasta form insert 31 and the end cover 32 are mounted to realize fixed connection can they be fit with and mounted to the die support 33, which improves logicality during installation of the user and the using safety when the pasta form insert 31 is neglected to be mounted.

It can be appreciated that, according to another solution, the cross-sectional area of the outer profile of the end cover 32 may be greater than the area of the outer edge of the bend portion 312, and the area of the first through hole 332 is less than the area of the outer edge of the end cover 32. Nevertheless, since the pasta form insert can always be mounted to the die support, in this case, in order to ensure the safety of the user when using the pasta maker, the end cover 32 and the bend portion 312 have to be connected in an undetachable manner for the user.

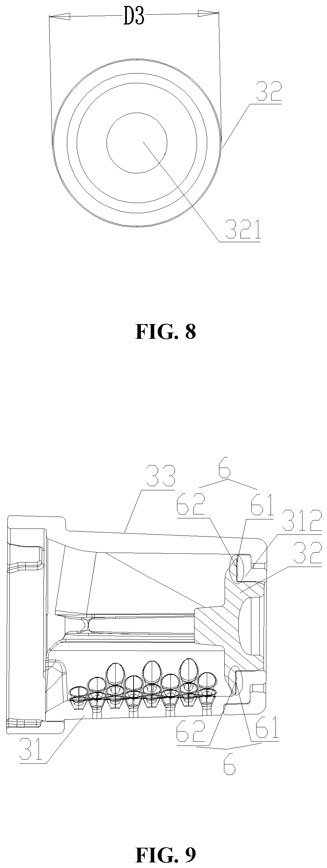

According to the present invention as shown in FIGS. 5 and 9, the bend portion 312 of the pasta form insert 31 is provided with the second through hole 313, which not only facilitates the mounting of the end cover 32 with the bend portion 312 via the second through hole 313, but also reduces the cost for manufacturing the bend portion 312 by blocking the second through hole 313 by the end cover 32.

With the arrangements that an outer edge of the second through hole 313 is in the outer edge of the first through hole 332, and that a diameter of the second through hole 313 is not less than a size of the front end of the extrusion screw rod 221, the following effects can be achieved: on the premise that the end cover 32 and the pasta form insert 31 are connected detachably for the user, in a case that the end cover 32 is detachably connected to the bend portion 312 and is neglected to be mounted, the extrusion screw rod 221 can stick out from the first through hole 332 through the second through hole 313 to get into the non-transmission state, to ensure the safety of the user; and in a case that the end cover 32 and the die support 33 are neglected to be mounted, the extrusion screw rod 221 can stick out from the second through hole 313 to get into the non-transmission state.

Further, the end cover 32 is inserted into the second through hole 313 along the axial direction and blocks the second through hole 313, to realize fixed connection between the end cover 32 and the bend portion 313. It can be appreciated that, the end cover 32 may be wholly inserted into the second through hole 313 to block the second through hole 313; the end cover 32 may be partially inserted into the second through hole 313 to achieve fixed connection. The fixed connection between the end cover 32 and the bend portion 312 is implemented by mutual insertion, which facilitates the assembly and installation for the user, makes the assembly and installation be easy and simple. Moreover, the end cover 32 blocks the second through hole 313, such that the end cover 32 and the bend portion 312 form an end surface together, which can reduce the leakage of dough pieces from the second through hole 313, leading to a good sealing performance.

Further, in the present solution, as shown in FIGS. 4 and 5, one side of the end cover 32 is provided with an insertion rod 322 formed along the axial direction of the extrusion screw rod 221, and the other side of the end cover 32 is provided with a mounting portion 321 configured to be in fit with a fitting portion 2221 located at the front end of the extrusion screw rod 221. When the mounting portion 321 is a projecting shaft, the fitting portion 2221 is a recess; and when the mounting portion 321 is a recess, the fitting portion 2221 is a projecting shaft, which is not specifically limited herein. The insertion rod 322 protrudes from an end surface of the end cover 32, such that the end cover 32 is fixedly connected to the bend portion 312 by inserting the insertion rod 322 into the second through hole 313. A reinforcing rib 3221 is provided on an outer side wall of the insertion rod 322, to make the insertion rod 322 be in interference fit with the second through hole 313, thereby further improving the reliability of the connection between the end cover and the bend portion. The number of the reinforcing ribs 3221 ranges from two to eight, where four and six are preferred.

It can be appreciated that, in a case that the radial size of the end cover 32 is identical to a radial size of the insertion rod 322, the end cover 32 and the insertion rod 322 can be inserted as a whole into the second through hole 313, which can also block the second through hole 313.

It can also be appreciated that, the reinforcing rib 3221 may be provided on an inner wall of the second through hole 313 instead of the outer side wall of the insertion rod 322, which can also realize the interference fit between the insertion rod 322 and the second through hole 313. Or, reinforcing ribs 3221 may be provided on the outer side wall of the insertion rod 322, and other reinforcing ribs 3221 may be provided on the inner wall of the second through hole 313 in a staggered manner with respect to the reinforcing ribs, to realize the interference fit between the insertion rod 322 and the second through hole 313.

Further, in order to ensure the reliability of the radial fixation of the end cover 32 by the bend portion 312, a positioning ring 3121, which is protruding, is provided on a front end surface of the bend portion 312 close to the die support. With the arrangement of the positioning ring 3121, a thickness of the bend portion 312 in the axial direction is increased, such that a contact area between the inner wall of the second through hole 313, which passes through both the bend portion 312 and the positioning ring 3121, and the outer side wall of the insertion rod 322 is enlarged, thereby improving the reliability of the radial fixation of the end cover 32 by the bend portion 312.

According to the present invention, as shown in FIGS. 5 and 9, in the case that the end cover 32 and the pasta form insert 31 are detachable for the user, the bend portion 312 at the front end of the pasta form insert 31 is provided with the second through hole 313. In this case, to improve the safety of the user when using, i.e. if the end cover 32 is not mounted or both the end cover 32 and the die support 33 are not mounted, the extrusion screw rod 221 can still stick out from the second through hole 313, to get out of engagement and be in the non-transmission state. Therefore, in this solution, the diameter of the second through hole 313 is not less than the size of the front end of the extrusion screw rod 221, such that if both the end cover and the die support are neglected to be mounted, the extrusion screw rod can stick out from the second through hole to get into the non-transmission state, and the extrusion screw rod cannot rotate. Or, in a case that only the end cover is neglected to be mounted, the extrusion screw rod 221 can stick out from both the first through hole 332 and the second through hole 313, to get into the non-transmission state. In this way, the using safety of the user is improved, while a using instruction is provided to the user to some extent, and the user is warned not to neglect to mount the pasta form insert 31 and the end cover 32.

Further, in the case that the end cover 32 and the pasta form insert 31 are detachable for the user, in order to not only reduce the cost of the die head assembly 3 but also satisfy various requirements of the user for making pasta of different shapes, multiple alternative pasta form inserts 31 may be provided for the user, where the end cover can be fitted with any one of the pasta form inserts 31. In this way, when the user is making pasta, thin pasta for example, a pasta form insert 31 with pasta outlet holes 311 for thin pasta can be chosen to fit with the end cover 32. Also, the end cover 32 and the bend portion of the sheet 31 are connected by mutual insertion, which is a foolproof operation for the user, which is very simple and convenient.

In some embodiments of the present application, as shown in FIGS. 9 and 10, in order to improve the reliability of the axial mounting of the bend portion 312 of the pasta form insert 31 and the end cover 32, along the axial direction of the extrusion screw rod 221, an overlap region 6 is formed by partial overlap between the end cover 32 and the bend portion 312. Specifically, as shown in FIGS. 6 and 8, when the bend portion 312 is provided with the second through hole 313, in order to form the overlap region 6, the diameter of the second through hole 313 is referred as D1, and an outer diameter of the end cover 32 is referred as D3, where D1≤ D3. It can be appreciated that, when the end cover 32 and the bend portion 312 are fixedly connected in an undetachable manner by fixation method such as ultrasonic welding, screw connection or the like, the bend portion 312 may not be provided with the second through hole 313, and an end, connected to the bend portion 312, of the end cover 32 is a plane, that is, the whole end surface of the end cover is fitted to the bend portion 312 to form the overlap region 6.

In the present solution, the overlap region 6 is formed by the end cover 32 and the bend portion 312, such that when the extrusion screw rod 22 pushes the end cover 32 along the axial direction, the end cover 32 has a doubled thickness, i.e. a thickness of the end cover 32 itself plus the thickness of the bend portion 312, which can effectively prevent the end cover 32 and the bend portion 312 from being deformed by pushing of the extrusion screw rod 32, and prevent the pasta form insert 31 form cracking at a position where the pasta form insert is bent to form the bend portion 312, such that the service life of the die head assembly 3 is increased.

Further, in order to improve an axial strength when the pasta form insert 31 and the die support 33 are mounted in place, an annular end face 331 surrounding the first through hole 332 is provided at a front end of the die support 33. When the die head assembly 3 is mounted in place, the bend portion 312 is located inside an inner channel of the die support 33, and the bend portion 312 abuts against the annular end face 331 in the axial direction. That is to say, in the axial direction of the extrusion screw rod 221, there's an overlap region between the bend portion 312 and the annular end face 331, and the axial strength of the pasta form insert 31 and the die support 33 is improved via the overlap region, thereby further reducing the risk of cracking of the bend portion.

It can be appreciated that, as shown in FIGS. 9 and 10, axial resistances to deformation and cracking of the end cover 32 and the bend portion 312 are improved via the overlap region 6 between the end cover 32 and the bend portion 312, which serves as a first guarantee; regarding the bend portion 312 and the die support 33, the axial resistances to deformation and cracking of the bend portion 312 and the die support 33 are improved via the overlap region between the bend portion 312 and the annular end face 331, which serves as a second guarantee. With the double guarantees, the risks of deformation and cracking of the bend portion 312 is effectively prevented.

It is known from FIGS. 9 and 10 that, the overlap region 6 includes a first overlap surface 61 located on the bend portion 312, and a second overlap surface 62 located on the end cover 32. Since the end cover 32 is of a round shape according to the present embodiment, and a center of the bend portion 312 is provided with the second through hole 313, the first overlap surface 61 and the second overlap surface 62 are of an annular shape. Certainly, along with the variations of the shape of the end cover and the shape of the second through hole, the first overlap surface 61 and the second overlap surface 61 may also be of other shapes, such as a rectangular ring shape, an irregular ring shape or the like.

In order to prevent the end cover 32 from being detached from the bend portion 312 of the pasta form insert 31 during use, i.e. to improve the integration of the pasta form insert 31 and the end cover 32, as shown in FIGS. 5, and 9 to 11, any one of the first overlap surface 61 and the second overlap surface 62 is provided with an ultrasonic wire 323, where the first overlap surface 61 and the second overlap surface 62 are welded along the ultrasonic wire 323, such that the first overlap surface 61 and the second overlap surface 62 are fixed in an undetachable manner. Preferably, the ultrasonic wire 323 is provided at a side, fitting with the bend portion 312, of the end cover.

It can be appreciated that, the first overlap surface 61 and the second overlap surface 62 may also be fixed in an undetachable manner by a fastener such as a screw, a pin or the like, or be fixed in an undetachable manner by bonding through glue or the like.

It should be noted that, as shown in FIGS. 10 and 11, the end cover 32 is mounted to the bend portion 312 from outside to inside in a direction against an output direction of the motor 11, and then are mounted to the die support 33 to form the die head assembly 3. Specifically, as for this kind of die head assembly 3, the insertion rod 332 and the mounting portion 321 thereof are located at the same side of the end cover 32, and the mounting portion 321 is located on the insertion rod 322. In this solution, if the end cover 32 and the bend portion 312 are not fixed in an undetachable manner such as ultrasonic welding, screw fastening or the like, the extrusion screw rod 221 will push the end cover 32 out from the first through hole 332 of the die support 33, resulting in failure of the transmission.

It should also be noted that, since the extrusion screw rod 221 pushes the end cover 32 along the output direction of the motor 11, when the end cover 32 is inserted with the second through hole 313 of the bend portion 312 along the output direction of the motor 11, according to another solution shown in FIGS. 5 and 9, the insertion rod 322 and the mounting portion 321 are located at two sides of the end cover 32 respectively, where the first overlap surface 61 is located at a right side, while the second overlap surface 62 is located at a left side. The more the extrusion screw rod 221 pushes the end cover 32, the more tightly the first overlap surface 61 is fitted to the second overlap surface 62. In this case, it is sufficient to simply make the first overlap surface 61 and the second overlap surface 62 abut against each other instead of being fixed in an undetachable manner by ultrasonic welding.

In some embodiments of the present application, as shown in FIGS. 2, 3, and 12 to 16, the pasta maker further includes the receiving chamber 41 for mounting the ejection component 5, where one end of the receiving chamber close to the ejection component is sealed, and the other end of the receiving chamber away from the ejection component is open. According to the present application, the ejection component 5 includes the resilient member 51 and the pushing member 52 having the pushing segment 521; and the stopping member 42 is arranged in the receiving chamber 41. On the premise of ensuring that if any component of the die head assembly 3 is neglected to be mounted, the extrusion screw rod 221 can be ejected to get into the non-transmission state to further ensure the using safety, in order to improve the smoothness of ejection of the extrusion screw rod 221, according to the present application, the ejection component 5 includes the pushing member 52 having the pushing segment 521, and the stopping member 42 is arranged in the receiving chamber 41, where the pushing segment 521 is arranged through the through hole 431 of the stopping member, and the stopping member 42 forms a radial limit to the pushing segment 521. That is to say, a radial deflection of the pushing segment 521 is reduced through the radial limit to the pushing segment 521 by the stopping member 42, such that when pushing is performed, the pushing segment 521 is on the same axis with the extrusion screw rod 221 and/or the stirring rod 211 being pushed. In this way, if any component of the die head assembly 3 is neglected to be mounted, the radial deflection of the pushing member 52 of the ejection component 5 can be effectively decreased, such that the extrusion screw rod 221 can be pushed out more effectively along the axial direction, to get into the non-transmission state.

Specifically, referring to FIGS. 3 and 13, the stopping member 42 has an axial length L1, the pushing segment has an axial length L2, and a ratio of the axial length L1 of the stopping member 42 to the axial length L2 of the pushing segment 521 is L, where 0.4≤L≤1, and L=L1/L2. In the embodiments of the present application, if any component of the die head assembly 3 is neglected to be mounted, even if the pasta maker is started, the extrusion screw rod 221 cannot be in transmission, which ensures the using safety and the physical safety of the user.

Preferably, in a case that the axial length L1 of the stopping member 42 is 15 mm, the axial length L2 of the pushing segment 521 is 17 mm, or 17.6 mm, or 18 mm.

In the present solution, the radial deflection of the pushing segment 521 is reduced through the radial limit to the pushing segment 521 formed by the stopping member 42, such that when pushing is performed, the pushing segment 521 is on the same axis with the extrusion screw rod 221 being pushed. Moreover, when the pushing segment 521 pushes the extrusion screw rod 221 out, the longer the portion of the pushing segment 521 beyond an end surface of the stopping member 42, the more likely the portion of the pushing segment 521 beyond the end surface of the stopping member 42 radially deflects due to the absence of a structure for radial limit. In view of this, the ratio L of the axial length of the stopping member 42 to the axial length of the pushing segment 521 is set to be in a range from 0.4 to 1. In this way, it can be ensured that in a case that L ranges from 0.5 to 1, the portion of the pushing segment 521 beyond the end surface of the stopping member 42 is at most half of a total length of the pushing segment 521, and the center of gravity of the pushing segment 521 is always located at the stopping member, i.e. the center of gravity of the pushing member 52 is always located at the stopping member, which can effectively reduce the deflection of the pushing segment 521, and especially effectively reduce the deflection of the portion of the pushing segment 521 beyond the end surface of the stopping member 42. In a case that L ranges from 0.4 to 0.5, in one aspect, the center of gravity of the pushing segment 521 is very close to the stopping member, thus subtle radial deflection of the pushing segment 521 can hardly affect the processing assembly being pushed out; in another aspect, on the premise that the pushing stroke of the pushing segment 521 keeps the same, the total length of the pushing segment 521 can be reduced to prevent the pushing segment 521 of the pushing member 52 from being broken and damaged during transportation because of slenderness. With the deflection being reduced, the pushing member 52 pushes the processing assembly out more stably, and a minimal pushing force is needed, which can prevent the pushing member 52 from being bent or broken.

It should be noted that, the expressions "the ejection component 5 pushes the extrusion screw rod 221 out along the axial direction" and "the extrusion screw rod being pushed" in the present application include not only a case that the ejection component 5 is in direct contact with the extrusion screw rod 221 and pushes the extrusion screw rod 221 out, but also a case that, one side of the stirring rod 211 being connected to the ejection component 5 and the other side thereof being connected to the extrusion screw rod 221, where the ejection component 5 directly pushes the stirring rod 211, and the stirring rod 211 pushes the extrusion screw rod 221.

In some embodiments of the present application, as shown in FIGS. 12 to 16, the ejection component 5 is located between the stirring rod 211 and the extrusion screw rod 221, where solutions of specific arrangements of the receiving chamber 41 and the structure of the stopping member 42 are as follows.

### First Solution

In order to prevent a case that, when the pushing segment 521 of the pushing member 52 pushes the extrusion screw rod 221 out along the axial direction, the stopping member 42 is driven by the pushing member 52 to move together along the axial direction, which makes the stopping member 42 fails to axially limit the ejection component 5, the receiving chamber 41 is provided in the stirring rod 211, and the stopping member 42 is fixedly arranged on an inner wall of the receiving chamber 41 such that a stepped shaft hole 43 is formed in the receiving chamber 41. The term "fixedly arranged" in the present solution refers to that, the stopping member 42 and the inner wall of the receiving chamber 41 are separated in structure, and are connected together by fixation manners such as bonding, adhesives, fasteners or the like.

It can be appreciated that, the receiving chamber 41 may be provided in the extrusion screw rod 221, while the arrangement of the stopping member 42 remains the same, and the stepped shaft hole 43 is formed in the receiving chamber 41 in the extrusion screw rod 221 by the arrangement of the stopping member 42.

### Second Solution

The present solution defers from the first solution in that, the stopping member 42 is integrally formed with the inner wall of the receiving chamber 41, and is provided on the inner wall in a protruding manner, so as to form the stepped shaft hole 43 in the receiving chamber 41. In this solution, the stopping member 42 is integrated with the receiving chamber 41, it is only needed to provide the stopping member 42 in a protruding manner, which reduces the cost of manufacture and simplifies the assembling process.

### Third Solution

The present solution defers from the first solution in that, the receiving chamber 41 is provided inside the output shaft hole of the motor 11, and the arrangement of the stopping member 42 remains the same.

### Fourth Solution

The present solution defers from the first solution in that, the receiving chamber 41 is located inside the output shaft hole of the motor 11, while the stopping member 42 is integrally formed with the inner wall of the receiving chamber 41, and is provided on the inner wall in a protruding manner, to form the stepped shaft hole 43 in the receiving chamber 41, the specific structure of which is illustrated in FIGS. 2 and 3.

It should be noted that, the stepped shaft hole 43 is formed just because of the stopping member 42 being arranged in the receiving chamber 41, where the stepped shaft hole 43 includes the through hole 431 of the stopping member and a transmission shaft hole 432. In a case that only one shaft segment of the extrusion screw rod 221 or the stirring rod 211 is in fit with the transmission shaft hole 432, and the pushing segment 521 completely passes through the through hole 431 of the stopping member, as shown in the FIGS. 2 and 3, the ratio L of the axial length of the stopping member 42 to the axial length of the pushing segment 521 is set in a range from 0.4 to 0.7, and preferably may be 0.48, 0.5, 0.52 or 0.55. In the case that L ranges from 0.4 to 0.7, the portion of the pushing segment 521 beyond the end surface of the stopping member 42 will not be too long to increase the radial deflection of the pushing segment 521; moreover, the extrusion screw rod 221 or the stirring rod 211 is ensured to be pushed completely out of the transmission shaft hole 432, which further ensures that the extrusion screw rod 221 is in the non-transmission state.

In some embodiments of the present application, as shown in FIGS. 13, 15 and 3, the pushing member 52 further includes a limiting portion 522 which prevents the pushing segment 521 from being ejected from the through hole 431 of the stopping member. With the arrangement of the limiting portion 522, the failure of the ejection component 5 caused by the whole pushing member 52 completely slipping out of the through hole 431 of the stopping member during the process that the pushing segment 521 of the pushing member 52 pushes the processing assembly is prevented.

In the present solution, in order to prevent the pushing segment 521, when pushing the extrusion screw rod 221 or the stirring rod 211 in the axial direction, from being stuck due to the radial deflection of the limiting portion 522, the inner wall of the receiving chamber 41 for receiving the limiting portion 522 is configured to radially abut against the limiting portion 522, so that the limiting portion 522 almost has no radial deflection. Moreover, in this solution, the limiting portion 522 of the pushing member 52 abuts against the inner wall of the receiving chamber 41, while the pushing segment 521, which is arranged in correspondence to the limiting portion 522 and is located on the pushing member 52, radially abuts against an inner wall of the through hole 413 of the stopping member. Both the limiting portion 522 and the pushing segment 521 are radially limited, which further reduces the reliability of the radial limit to the pushing member 52, and is beneficial for the extrusion screw rod 221 or the stirring rod 211 to be pushed out in the axial direction in a case that the die head assembly 3 is neglected to be mounted, to make the extrusion screw rod 221 get into the non-transmission state, so as to ensure the using safety and physical safety of the user.

It should be noted that, the specific shape of the limiting portion is not limited herein. For example, the limiting portion 522 may be a protruding point provided on the pushing segment 521 in a protruding manner, or may be a columnar structure having a diameter greater than the pushing segment 521, or may be an annular structure provided on the pushing segment 521 in a protruding manner.

In the present solution, when the pushing segment 521 pushes the extrusion screw rod 221 or the stirring rod 211 out to make the extrusion screw rod 221 be in the non-transmission state, the limiting portion 522 and the stopping member 42 oppositely clamp the first seal ring 541, such that the resilient member 51 is in a sealed space, into which flour and/or water cannot leak through the gap between the stopping member 42 and the pushing segment 521, which improves the seal protection for the resilient member 51. When the die head assembly 3 is mounted in place and the extrusion screw rod 221 is in the transmission state, the through hole 431 of the stopping member is blocked by the extrusion screw rod 221 or the stirring rod 211; since the through hole 431 of the stopping member is blocked by the extrusion screw rod 221 or the stirring rod 211, flour and/or water cannot come into the place, where the resilient member 51 is located, through the through hole 431 of the stopping member, thereby the seal protection of the resilient member 51 is improved.

In some embodiments of the present application, as shown in FIGS. 16, 17 and 18, the resilient member 51 is defined to be a spring; an end of the pushing member 52 fitting with the spring is provided with a clamping member 523 of a cross shape in a protruding manner, and the spring is clamped on the clamping member 523. According to this solution, on one hand, the spring is radially and axially limited; on the other hand, the clamping member 523 of a cross shape has a simple structure, and the points every 90 degrees on the circumference of the resilient member are taken into consideration, so that the force acting on the spring clamped on the clamping member 523 is uniform and smooth. Moreover, the spring being clamped is hard to disengage from the pushing member 52, which ensures the axial stability of the spring; the spring being clamped is also hard to sway in a radial direction, which prevents the spring, when ejecting the pushing member 52, from deviating from a central axis of the pushing member 52.

In some embodiments of the present application, the receiving chamber 41 further includes the stopping member 42, which limits the ejection component 5 within the receiving chamber 41, and the stepped shaft hole 43, where the stepped shaft hole 43 includes the through hole 431 of the stopping member and the transmission shaft hole 432 being located at an opening of the receiving chamber 41 and in communication with the through hole 431 of the stopping member. In the transmission state, the stirring rod 211 or the extrusion screw rod 221 is inserted into the through hole 431 of the stopping member. In this way, as long as an ejecting distance of the ejection component 5 is greater than an axial length of the through hole 431 of the stopping member, the extrusion screw rod 221 will be directly or indirectly made into the non-transmission state when any component of the die head assembly 3 is neglected to be mounted. That is to say, compared with the solution in the prior art that the extrusion screw rod 221 or the stirring rod 211 is in transmission connection with the transmission shaft hole 432 of the stepped shaft hole 431, an ejection stroke of the ejection component 5 is effectively decreased, which further ensures the axial stability when the extrusion screw rod 221 is being ejected, and reduces the cost for manufacturing the ejection component.

Specifically, as shown in FIGS. 13, 15 and 19, in order to realize the effective transmission of the extrusion screw rod 221 and to ensure the transmission stability, the pasta maker according to the present solution includes a stepped shaft segment 44 which drives the extrusion screw rod 221 to rotate, and the stepped shaft hole 43, which is configured to fit with the stepped shaft segment 44 through insertion, is formed in the receiving chamber 41. With this solution, if one of the shaft segments of the stepped shaft segment 44 fails in transmission, the remaining shaft segment can still be in transmission, which reduces the risk of transmission failure.

It should be noted that, in the present application, the expression "a stepped shaft segment 44 which drives the extrusion screw rod 221 to rotate" includes not only a case that the stepped shaft segment 44 directly drives the stirring rod 211 to rotate, but also a case that the stepped shaft segment 44 is provided on the stirring rod 211 or the output shaft of the motor, to drive the stirring rod 211 to rotate, and then the stirring rod 211 drives the extrusion screw rod 221 to rotate.

Further, the stepped shaft segment 44 includes a first shaft segment 441 and a second shaft segment 442, and the stepped shaft hole 43 includes the through hole 431 of the stopping member and the transmission shaft hole 432 in communication with the through hole 431 of the stopping member. With the arrangements that the first shaft segment 441 fits with the through hole 431 of the stopping member by insertion, and the second shaft segment 442 fits with the transmission shaft hole 432 by insertion, i.e. a radial size of the first shaft segment 441 is less than that of the second shaft segment 442, when the force acting on the second shaft segment 442 is too large, it can be dispersed by the fitting between the first shaft segment 44 and the inner wall of the through hole of the stopping member 42, so as to prevent compression failure on a surface of the whole stepped shaft segment 44.

Further, in the present solution, the first shaft segment 441 and the through hole 431 of the stopping member are both of a polygon shape or a gear structure, such that the first shaft segment can be inserted into the through hole of the stopping member for transmission. That is to say, when a shape of an end surface of the first shaft segment 441 is a polygon, a shape of an end surface of the through hole 431 of the stopping member is also the same polygon; when the shape the end surface of the first shaft segment 441 is a gear structure, the shape of the end surface of the through hole 431 of the stopping member is also the same gear structure. In the present solution, an end surface of the second shaft segment 442 and an end surface of the transmission shaft hole 432 are both a polygon or a gear structure, so that the second shaft segment 442 can be inserted into the transmission shaft hole 432 for transmission. That is to say, when the shape of the end surface of the second shaft segment 442 is a polygon, the shape of the end surface of the transmission shaft hole 432 is also the same polygon; when the shape of the end surface of the second shaft segment 442 is a gear structure, the shape of the end surface of the transmission shaft hole 432 is also the same gear structure.

It should be noted that, the shape of the end surface of the first shaft segment 441 and the shape of the end surface of the through hole 431 of the stopping member are not limited to the above two kinds, alternatively, the shape may be a shape of a spline, or other special shapes for transmission, where the special shapes may be a circle with the edge being cut, or the like. The shape of the end surface of the second shaft segment 442 and the shape of the end surface of the transmission shaft hole 432 may employ the solution similar to the above solution. The stepped shaft segment may have multiple segments, i.e. more than two segments, and generally not exceed five segments.

It is more important that, in the present solution, the pushing member 52 is configure to have a pushing stroke not less than an axial length of the transmission shaft hole 432, such that when the extrusion screw rod 221 cannot be axially locked due to any component of the die head assembly 3 being neglected to be mounted, the pushing member 52 of the ejection component 5 only needs to push a minimum distance of the length of the transmission shaft hole 431, and the extrusion screw rod 221 or the stirring rod 211 can be pushed out of the receiving chamber 41, so that the extrusion screw rod 221 is in the non-transmission state. In this way, the ejection stroke of the resilient member 51 is significantly decreased, and the pushing stroke of the pushing member 52 is also decreased, which improves the axial stability of the resilient member 51 when ejecting the pushing member, and improves the stability of the pushing member 52 when axially pushing the extrusion screw rod 221 or the stirring rod 211, to effectively ensure the extrusion screw rod 221 to be axially pushed. Moreover, an axial length of the second shaft segment 442 is configured to be not less than an axial length of the first shaft segment 442. As shown in FIGS. 12 to 15, since the first shaft segment 441 is in fit with the stopping member 42, and the second shaft segment 442 is in fit with the transmission shaft hole 432, it is known that the first shaft segment has a smaller radial size, with the axial length of the second shaft segment 442 being not less than the axial length of the first shaft segment 442, there is no compression failure when the first shaft segment 432 is in fit with the stopping member 42, which ensures the stability of transmission.

It should also be noted that, in the present solution, as shown in the FIGS. 12 to 16, the pushing stroke of the pushing member 52 is not less than the axial length of the transmission shaft hole 432, i.e. the axial length L2 of the pushing segment 521 is not less than the axial length of the transmission shaft hole 432. Based on that, when the stepped shaft segment 44 is mounted in place, there is still a portion of the pushing segment 521 be located in the through hole 431 of the stopping member, so as to prevent a situation that the pushing member 52 slips out from the through hole 431 of the stopping member and pushing out the extrusion screw rod 221 or the stirring rod 211 after slipping out, and can hardly get into the through hole 431 of the stopping member accurately. Nevertheless, as for the solution of the through hole 431 of the stopping member and the first shaft segment 441 of the stepped shaft segment 44, if the pushing segment 521 is configure to be too long, the cost for manufacturing the pushing member 52 will definitely be increased, and there will be a risk of increasing the radial deflection of the pushing segment 521. Therefore, the ratio L of the axial length of the stopping member 42 to the axial length of the pushing segment 521 is set to be in a range from 0.7 to 1.

It should also be noted that, the resilient member 51 may perform the ejection by the resilient force, such as the resilience of the spring, the soft robber pad or the like; or by the magnetic repulsive force between magnets arranged with the same poles facing each other.

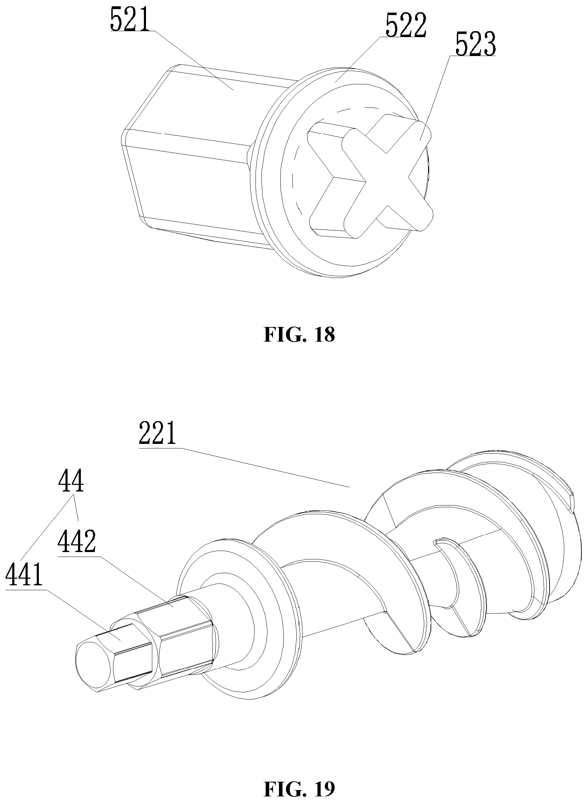

Preferably, as shown in FIGS. 12 to 16, the pasta maker is a horizontal pasta maker, where the stirring rod 211 and the extrusion screw rod 221 are coaxially arranged. The receiving chamber 41 is located in the stirring rod 211, i.e. the stepped shaft hole 43 is located in the stirring rod 211, and the stepped shaft segment 44 is an end portion of the extrusion screw rod 221 located at a side where the extrusion screw rod 221 is in fit with the stepped shaft hole 43. As shown in FIG. 19, the stepped shaft segment 44 only includes the first shaft segment 441 and the second shaft segment 442, where both the end surface of the first shaft segment 441 and the end surface of the second shaft segment 442 are hexagonal-shaped, and the radial size of the first shaft segment 441 is smaller than the radial size of the second shaft segment 442.

If a tail portion of the resilient member 51 is not limited, the resilient member 51 is apt to pass through a through hole of a tail portion of the receiving chamber, leading to the failure of the assembly, and further, the processing assembly cannot be ejected out to get into the non-transmission state when any component of the die head assembly is neglected to be mounted. Therefore, in some embodiments of the present application, the stopping cap 53 for axially limiting the resilient member 51, and a limiting step 56 are provided at the through hole of the end portion of the receiving chamber 41, where the stopping cap 53 is horizontally inserted into the through hole at the tail portion of the receiving chamber 41 to axially abut against the limiting step 56, to block the through hole at the tail portion of the receiving chamber, as specifically shown in FIG. 3.

Since the stopping cap 53 always abuts against the corresponding limiting step 56, and the through hole at the tail portion of the receiving chamber 41 is blocked by the stopping cap, the resilient member 51 will not be affected by outside matters such as water stain, flour or the like, which makes the resilient member rust or the resilience of the resilient member be decreased, whereby further ensures that if the component of the die head assembly is neglected to be mounted, the resilient member 51 can effectively push the pushing member 52, and the pushing member 52 pushes the extrusion screw rod 221 or the stirring rod 211 via the pushing segment 521, to make the extrusion screw rod 221 be in the non-transmission state.

Specifically, when the limiting step 56 has one stage of limiting step, the stopping cap 53 is horizontally inserted to reach an end surface of the limiting step to axially abut against the end surface, so as to block the tail portion of the receiving chamber 41 for the resilient member 51; or when the limiting step 56 has two stages of limiting step, the stopping cap 53 is horizontally inserted to reach the innermost limiting step and axially abuts against each stage of limiting step, so as to block the tail portion of the receiving chamber 41 for the resilient member 51.

Further, the seal ring 54 is arranged in the receiving chamber 41, where the seal ring 54 includes the first seal ring 541 arranged between the pushing member 52 and the stopping member 42, and a second seal ring 542 arranged between the stopping cap 53 and the limiting step 56. With the second seal ring 541 being arranged between the stopping cap 53 and the limiting step 56, the tail portion of the receiving chamber 41 is blocked more tightly. Moreover, one end of the stopping cap 53 axially abuts against the resilient member 51, while the snap ring 55 is clamped at the other end thereof, where the snap ring 55 is in clamped connection with an inner wall of the through hole at the tail end of the receiving chamber 41 to fix the stopping cap 53, such that the stopping cap 53 is fixed in position and will not become loose with rotation, which further improve the axial limit to the resilient member 51.

The embodiments described hereinabove are only preferred embodiments of the present application, and are not intended to limit the implementation scope of the present application.

## Claims

1. A pasta maker, comprising a base (1) being provided with a motor (11), a processing chamber (2) being mounted on the base (1), and an ejection component (5), wherein
an extrusion screw rod (221) and a stirring rod (211) are arranged in the processing chamber (2), and a die head assembly (3) is arranged at a front end of the extrusion screw rod (221); wherein
the die head assembly (3) comprises a pasta form insert (31) provided with pasta outlet holes, an end cover (32) and a die support (33), **characterized in that**,
the end cover (32) and the pasta form insert (31) are two independent components, a front end of the pasta form insert (31) is bent to form a bend portion (312), and the pasta form insert (31) is mounted to the end cover (32) via the bend portion (312);
an end portion of the die support (33) is provided with a first through hole (332), and the first through hole (332) is covered when the bend portion (312) and the end cover (32) are assembled; wherein
the bend portion (312) is provided with a second through hole (313);
along an axial direction of the second through hole (313), an outer edge of the second through hole (313) is located inside an outer edge of the first through hole (332), and a diameter of the second through hole (313) is greater than or equal to a size of the front end of the extrusion screw rod (221);
the end cover (32) is inserted into the second through hole (313) along the axial direction to block the second through hole (313), to mount the end cover (32) to the bend portion (312); and
the ejection component (5) is located between the output shaft of the motor (11) and the extrusion screw rod (221) or between the stirring rod (211) and the extrusion screw rod (221);
the end cover (32) and the bend portion (312) are configured to be detachably connected and in case that the end cover (32) is neglected to be mounted,
the extrusion screw rod (221) is configured to stick out from the first through hole (332) through the second through hole (313), to be in the non-transmission state.

2. The pasta maker according to claim 1, wherein an axial cross-sectional area of an outer profile of the end cover (32) is less than an area of the first through hole (332), the area of the first through hole (332) is less than an area of an outer edge of the bend portion (312), and the end cover (32) is located on the bend portion (312).

3. The pasta maker according to claim 1, wherein
in a case that the end cover (32) and the bend portion (312) are configured to be detachably connected and the end cover (32) is neglected to be mounted, the extrusion screw rod (221) is configured to stick out from the first through hole (332) through the second through hole (313), to be in the non-transmission state.

4. The pasta maker according to claim 3, wherein the end cover (32) is provided with an insertion rod (322) extending along an axial direction of the extrusion screw rod (221), an outer side wall of the insertion rod (322) or an inner wall of the second through hole (313) is provided with a reinforcing rib (3221), and the end cover (32) is inserted into the second through hole (313) via the insertion rod (322).

5. The pasta maker according to claim 1, wherein the extrusion screw rod (221), the end
cover (32), the bend portion (312) and the first through hole (332) are located on a same central axis.

6. The pasta maker according to claim 1, wherein along an axial direction of the extrusion screw rod (221), an overlap region (6) is formed by partial overlap between the end cover (32) and the bend portion (312), and the end cover (32) and the bend portion (312) are fixedly connected via the overlap region (6).

7. The pasta maker according to claim 6, wherein the overlap region (6) comprises a first overlap surface (61) located on the bend portion (312) and a second overlap surface (62) located on the end cover (32), wherein any one of the first overlap surface (61) and the second overlap surface (62) is provided with an ultrasonic wire (323), and the first overlap surface (61) and the second overlap surface (62) are undetachably fixed by ultrasonic welding via the ultrasonic wire (323).

8. The pasta maker according to claim 1, wherein a front end of the die support (33) is provided with an annular end face (331) surrounding the first through hole (332), and when the die head assembly (3) is mounted in place, the bend portion (312) is located in an inner channel of the die support (33), and the bend portion (312) axially abuts against the annular end face (331).

9. The pasta maker according to claim 1, wherein the pasta maker further comprises two or more pasta form inserts (31), and the end cover (32) is configured to fit any of the pasta form inserts (31).

10. The pasta maker according to claim 1, wherein the pasta maker further comprises a receiving chamber (41) where the ejection component (5) is mounted; wherein
one end of the receiving chamber (41) close to the ejection component (5) is sealed, and the other end of the receiving chamber (41) away from the ejection component (5)is open;
a stopping member (42) configured for limiting the ejection component (5) within the receiving chamber (41), and a stepped shaft hole (43) are provided in the receiving chamber (41); and wherein
the stepped shaft hole (43) comprises a through hole (431) of the stopping member (42), and a transmission shaft hole (432) being located at an opening of the receiving chamber (41) and is in communication with the through hole (431) of the stopping member (42); and
in a transmission state, the stirring rod (211) or the extrusion screw rod (221) is inserted into the through hole (431) of the stopping member (42).

11. The pasta maker according to claim 10, wherein the ejection component (5) comprises a resilient member (51) and a pushing member (52) having a pushing segment (521), the stopping member (42) is provided in the receiving chamber (41), the pushing segment (521) is arranged through the through hole (431) of the stopping member (42), and the pushing segment (521) is radially limited by the stopping member (42); and wherein
a ratio of an axial length of the stopping member (42) to an axial length of the pushing segment (521) is L, wherein 0.4≤L≤1.

12. The pasta maker according to claim 10, wherein
the ejection component (5) comprises a resilient member (51) and a pushing member (52) having a pushing segment (521), the extrusion screw rod (221) or the stirring rod (211) further comprises a stepped shaft segment (44) fitting the stepped shaft hole (43), and the stepped shaft segment (44) comprises a first shaft segment (441) and a second shaft segment (442); wherein
the first shaft segment (441) and the through hole (431) of the stopping member (42) are fitted by insertion, and the second shaft segment (442) and the transmission shaft hole (432) are fitted by insertion; and
a pushing stroke of the pushing member (52) is greater than or equal to an axial length of the transmission shaft hole (432), and an axial length of the second shaft segment (442) is greater than or equal to an axial length of the first shaft segment (441).

13. The pasta maker according to claim 10, wherein the stirring rod (211), which is arranged in the processing chamber (2), is connected with the extrusion screw rod (221) by mutual insertion, the receiving chamber (41) is located in the stirring rod (211) or the extrusion screw rod (221), and the stopping member (42) protrudes with respect to an inner wall of the receiving chamber (41) to form the stepped shaft hole (43) in the receiving chamber (41).

## Patentansprüche

1. Nudelmaschine, umfassend eine mit einem Motor (11) versehene Basis (1), eine an der Basis befestigte Verarbeitungskammer (2) und eine Auswurfkomponente (5), wobei eine Extrusionsschneckenstange (221) und ein Rührstab (211) in der Verarbeitungskammer (2) angeordnet sind und eine Düsenkopfanordnung (3) an einem vorderen Ende der Extrusionsschneckenstange (221) angeordnet ist; wobei die Düsenkopfanordnung (3) einen mit Nudelauslasslöchern versehenen Nudelformeinsatz (31), eine Endabdeckung (32) und eine Düsenstütze (33) umfasst, **dadurch gekennzeichnet, dass**
die Endabdeckung (32) und der Nudelformeinsatz (31) zwei unabhängige Komponenten sind, ein vorderes Ende des Nudelformeinsatzes (31) zum Ausbilden eines Biegungsabschnitts (312) gebogen ist und der Nudelformeinsatz (31) über den Biegungsabschnitt (312) an der Endabdeckung (32) befestigt ist;
ein Endabschnitt der Düsenstütze (33) mit einem ersten Durchgangsloch (332) versehen ist und das erste Durchgangsloch (332) abgedeckt ist, wenn der Biegungsabschnitt (312) und die Endabdeckung (32) zusammengebaut sind; wobei
der Biegungsabschnitt (312) mit einem zweiten Durchgangsloch (313) versehen ist; sich ein Außenrand des zweiten Durchgangslochs (313) entlang einer axialen Richtung des zweiten Durchgangslochs (313) innerhalb eines Außenrandes des ersten Durchgangslochs (332) befindet und ein Durchmesser des zweiten Durchgangslochs (313) größer als eine oder gleich einer Größe des vorderen Endes der Extrusionsschneckenstange (221) ist;
die Endabdeckung (32) entlang der axialen Richtung in das zweite Durchgangsloch (313) eingesetzt ist, um das zweite Durchgangsloch (313) zu blockieren, um die Endabdeckung (32) an dem Biegungsabschnitt (312) zu befestigen; und
die Auswurfkomponente (5) sich zwischen der Abtriebswelle des Motors (11) und der Extrusionsschneckenstange (221) oder zwischen dem Rührstab (211) und der Extrusionsschneckenstange (221) befindet;
die Endabdeckung (32) und der Biegungsabschnitt (312) dazu ausgebildet sind, lösbar verbunden zu sein, und, für den Fall, dass es unterlassen wird, die Endabdeckung (32) zu befestigen, die Extrusionsschneckenstange (221) dazu ausgebildet ist, durch das zweite Durchgangsloch (313) hindurch aus dem ersten Durchgangsloch (332) herauszuragen, um in dem Nicht-Übertragungszustand zu sein.

2. Nudelmaschine nach Anspruch 1, wobei eine axiale Querschnittsfläche eines Außenprofils der Endabdeckung (32) geringer ist als eine Fläche des ersten Durchgangslochs (332), die Fläche des ersten Durchgangslochs (332) geringer ist als eine Fläche eines Außenrandes des Biegungsabschnitts (312) und sich die Endabdeckung (32) an dem Biegungsabschnitt (312) befindet.

3. Nudelmaschine nach Anspruch 1, wobei
für einen Fall, dass die Endabdeckung (32) und der Biegungsabschnitt (312) dazu ausgebildet sind, lösbar verbunden zu sein, und es unterlassen wird, die Endabdeckung (32) zu befestigen, die Extrusionsschneckenstange (221) dazu ausgebildet ist, durch das zweite Durchgangsloch (313) hindurch aus dem ersten Durchgangsloch (332) herauszuragen, um in dem Nicht-Übertragungszustand zu sein.

4. Nudelmaschine nach Anspruch 3, wobei die Endabdeckung (32) mit einem sich entlang einer axialen Richtung der Extrusionsschneckenstange (221) erstreckenden Einsetzstab (332) versehen ist, eine äußere Seitenwand des Einsetzstabs (332) oder eine Innenwand des zweiten Durchgangslochs (313) mit einer Verstärkungsrippe (3221) versehen ist, und die Endabdeckung (32) über den Einsetzstab (322) in das zweite Durchgangsloch (313) eingesetzt ist.

5. Nudelmaschine nach Anspruch 1, wobei sich die Extrusionsschneckenstange (221), die Endabdeckung (32), der Biegungsabschnitt (312) und das erste Durchgangsloch (332) auf einer selben zentralen Achse befinden.

6. Nudelmaschine nach Anspruch 1, wobei ein Überlappungsbereich (6) entlang einer axialen Richtung der Extrusionsschneckenstange (221) durch eine teilweise Überlappung zwischen der Endabdeckung (32) und dem Biegungsabschnitt (312) ausgebildet ist und die Endabdeckung (32) und der Biegungsabschnitt (312) über den Überlappungsbereich (6) fest verbunden sind.

7. Nudelmaschine nach Anspruch 6, wobei der Überlappungsbereich (6) eine sich an dem Biegungsabschnitt (312) befindende erste Überlappungsfläche (61) und eine sich an der Endabdeckung (32) befindende zweite Überlappungsfläche (62) umfasst, wobei entweder die erste Überlappungsfläche (61) oder die zweite Überlappungsfläche (62) mit einem Ultraschalldraht (323) versehen ist und die erste Überlappungsfläche (62) und die zweite Überlappungsfläche (62) über den Ultraschalldraht (323) durch Ultraschallschweißen unlösbar befestigt sind.

8. Nudelmaschine nach Anspruch 1, wobei ein vorderes Ende der Düsenstütze (33) mit einer das erste Durchgangsloch (332) umgebenden ringförmigen Endfläche (331) versehen ist und, wenn die Düsenkopfanordnung (3) an Ort und Stelle befestigt ist, sich der Biegungsabschnitt (312) in einem Innenkanal der Düsenstütze (33) befindet, und der Biegungsabschnitt (312) axial an der ringförmigen Endfläche (331) anliegt.

9. Nudelmaschine nach Anspruch 1, wobei die Nudelmaschine des Weiteren zwei oder mehr Nudelformeinsätze (31) umfasst und die Endabdeckung (32) dazu ausgebildet ist, auf jeden beliebigen der Nudelformeinsätze (31) zu passen.

10. Nudelmaschine nach Anspruch 1, wobei die Nudelmaschine des Weiteren eine Aufnahmekammer (41) umfasst, in der die Auswurfkomponente (5) befestigt ist; wobei ein Ende der Aufnahmekammer (41) nahe der Auswurfkomponente (5) abgedichtet ist; und
das andere Ende der Aufnahmekammer (41) entfernt von der Auswurfkomponente (5) offen ist;
ein zum Begrenzen des Auswurfkomponente (5) innerhalb der Aufnahmekammer (41) ausgebildetes Anschlagelement (42) und ein gestuftes Wellenloch (43) in der Aufnahmekammer (41) vorgesehen sind; und wobei
das gestufte Wellenloch (43) ein Durchgangsloch (431) des Anschlagelements (42) und ein Übertragungswellenloch (432) umfasst, wobei das Übertragungswellenloch (432) sich an einer Öffnung der Aufnahmekammer (41) befindet und in Verbindung mit dem Durchgangsloch (431) des Anschlagelements (42) steht; und
der Rührstab (211) oder die Extrusionsschneckenstange (221) in einem Übertragungszustand in das Durchgangsloch (431) des Anschlagelements (42) eingesetzt wird.

11. Nudelmaschine nach Anspruch 10, wobei die Auswurfkomponente (5) ein elastisches Element (51) und ein Schiebeelement (52) mit einem Schiebesegment (521) umfasst, das Anschlagelement (42) in der Aufnahmekammer (41) vorgesehen ist, das Schiebesegment (521) durch das Durchgangsloch (431) des Anschlagelements (42) hindurch angeordnet ist und das Schiebesegment (521) durch das Anschlagelement (42) radial begrenzt ist; und wobei
ein Verhältnis einer axialen Länge des Anschlagelements (42) zu einer axialen Länge des Schiebesegments (521) L ist, wobei 0,4 ≤ L ≤ 1.

12. Nudelmaschine nach Anspruch 10, wobei
die Auswurfkomponente (5) ein elastisches Element (51) und ein Schiebeelement (52) mit einem Schiebesegment (521) umfasst, die Extrusionsschneckenstange (221) oder der Rührstab (211) des Weiteren ein in das gestufte Wellenloch (43) passendes gestuftes Wellensegment (44) umfasst, und das gestufte Wellensegment (44) ein erstes Wellensegment (441) und ein zweites Wellensegment (442) umfasst; wobei das erste Wellensegment (441) und das Durchgangsloch (431) des Anschlagelements (42) ineinandergesteckt sind und das zweite Wellensegment (442) und das Übertragungswellenloch (432) ineinander gesteckt sind; und
ein Hub des Schiebelements (52) größer als eine oder gleich einer axialen Länge des Übertragungswellenlochs (432) ist und eine axiale Länge des zweiten Wellensegments (442) größer als eine oder gleich einer axialen Länge des ersten Wellensegments (441) ist.

13. Nudelmaschine nach Anspruch 10, wobei der in der Verarbeitungskammer (2) angeordnete Rührstab (211) durch gegenseitiges Einstecken mit der Extrusionsschneckenstange (221) verbunden ist, sich die Aufnahmekammer (41) in dem Rührstab (211) oder der Extrusionsschneckenstange (221) befindet, und das Anschlagelement (42) in Bezug auf eine Innenwand der Aufnahmekammer (41) hervorsteht, um das gestufte Wellenloch (43) in der Aufnahmekammer (41) zu bilden.

## Revendications

1. Machine à pâtes, comprenant une base (1) pourvue d'un moteur (11), une chambre de traitement (2) montée sur la base (1), et un composant d'éjection (5), dans laquelle une tige (221) de vis d'extrusion et un agitateur (211) sont disposés dans la chambre de traitement (2), et un ensemble (3) de tête d'extrudeuse est disposé d'une extrémité avant de la tige (221) de vis d'extrusion ; dans laquelle
l'ensemble (3) de tête d'extrudeuse comprend un insert (31) de forme de pâtes pourvu de trous de sortie de pâtes, un couvercle d'extrémité (32) et un support d'extrudeuse (33), **caractérisée en ce que**
la couvercle d'extrémité (32) et l'insert (31) de forme de pâtes sont deux composants indépendants, **en ce qu'**une extrémité avant de l'insert (31) de forme de pâtes est pliée pour réaliser une partie de pliage (312), et **en ce que** l'insert (31) de forme de pâtes est fixé au couvercle d'extrémité (32) via la partie de pliage (312) ;
**en ce qu'**une partie d'extrémité du support d'extrudeuse (33) est pourvue d'un premier trou traversant (332), et **en ce que** le premier trou traversant (332) est couvert lorsque la partie de pliage (312) et le couvercle d'extrémité (32) sont assemblés ; dans laquelle la partie de pliage (312) est pourvue d'un deuxième trou traversant (313) ;
un bord extérieur du deuxième trou traversant (313) est situé le long d'une direction axiale du deuxième trou traversant (313) dans un bord extérieur du premier trou traversant (332), et un diamètre du deuxième trou traversant (313) est supérieur ou égal à une taille de l'extrémité avant de la tige (221) de vis d'extrusion ;
le couvercle d'extrémité (32) est inséré dans le deuxième trou traversant (313) le long de la direction axiale pour bloquer le deuxième trou traversant (313) pour fixer le couvercle d'extrémité (32) à la partie de pliage (312) ; et
le composant d'éjection (5) est situé entre l'arbre de sortie du moteur (11) et la tige (221) de vis d'extrusion ou entre l'agitateur (211) et la tige (221) de vis d'extrusion ;
le couvercle d'extrémité (32) et la partie de pliage (312) sont configurés pour être reliés de manière amovible, et, dans le cas où l'on omet de fixer le couvercle d'extrémité (32), la tige (221) de vis d'extrusion est configurée pour dépasser du premier trou traversant (332) à travers le deuxième trou traversant (313) afin d'être dans l'état de non-transmission.

2. Machine à pâtes selon la revendication 1, dans laquelle une surface de section transversale axiale d'un profil extérieur du couvercle d'extrémité (32) est inférieur à une surface du premier trou traversant (332), la surface du premier trou traversant (332) est inférieure à une surface d'un bord extérieur de la partie de pliage (312), et le couvercle d'extrémité (32) est situé sur la partie de pliage (312).

3. Machine à pâtes selon la revendication 1, dans laquelle
dans un cas où le couvercle d'extrémité (32) et la partie de pliage (312) sont configurés pour être reliés de manière amovible et l'on omet de fixer le couvercle d'extrémité (32), la tige (221) de vis d'extrusion est configurée pour dépasser du premier trou traversant (332) à travers le deuxième trou traversant (313) afin d'être dans l'état de non-transmission.

4. Machine à pâtes selon la revendication 3, dans laquelle le couvercle d'extrémité (32) est pourvu d'une tige d'insertion (322) qui s'étend le long d'une direction axiale de la tige (221) de vis d'extrusion, une paroi latérale extérieure de la tige d'insertion (322) ou une paroi intérieure du deuxième trou traversant (313) est pourvue d'une nervure de renforcement (3221), et le couvercle d'extrémité (32) est inséré dans le deuxième trou traversant (313) via la tige d'insertion (322).

5. Machine à pâtes selon la revendication 1, dans laquelle la tige (221) de vis d'extrusion, le couvercle d'extrémité (32), la partie de pliage (312) et le premier trou traversant (3329 sont situés sur un même axe central.

6. Machine à pâtes selon la revendication 1, dans laquelle une zone de chevauchement (6) est réalisée le long d'une direction axiale de la tige (221) de vis d'extrusion par un chevauchement partiel entre le couvercle d'extrémité (32) et la partie de pliage (312), et le couvercle d'extrémité (32) et la partie de pliage (312) sont reliés de manière fixe via la zone de chevauchement (6).

7. Machine à pâtes selon la revendication 6, dans laquelle la zone de chevauchement (6) comprend une première surface de chevauchement (61) située sur la partie de pliage (312) et une deuxième surface de chevauchement (62) située sur le couvercle d'extrémité (32), dans laquelle une parmi la première surface de chevauchement (61) et la deuxième surface de chevauchement (62) est pourvue d'un fil ultrasonique (323), et la première surface de chevauchement (61) et la deuxième surface de chevauchement (62) sont fixées de manière inamovible par soudage par ultrasons vie le fil ultrasonique (323).

8. Machine à pâtes selon la revendication 1, dans laquelle une extrémité avant du support d'extrudeuse (33) est pourvue d'une face d'extrémité (331) annulaire qui entoure le premier trou traversant (332) et, lorsque l'ensemble (3) de tête d'extrudeuse est monté sur place, la partie de pliage (312) est située dans un canal intérieur du support d'extrudeuse (33), et la partie de pliage (312) s'appuie axialement contre la face d'extrémité (331) annulaire.

9. Machine à pâtes selon la revendication 1, dans laquelle la machine à pâtes comprend en outre deux ou plus inserts (31) de forme de pâtes et le couvercle d'extrémité (32) est configuré pour aller sur n'importe quel des inserts (31) de forme de pâtes.

10. Machine à pâtes selon la revendication 1, dans laquelle la machine à pâtes comprend en outre une chambre de réception (41) dans laquelle le composant d'éjection (5) est monté ; dans laquelle
une extrémité de la chambre de réception (41) près du composant d'éjection (5) est étanchée, et
l'autre extrémité de la chambre de réception (41) loin du composant d'éjection (5) est ouverte ;
un élément d'arrêt (42) configuré pour limiter le composant d'éjection (5) dans la chambre de réception (41) et un trou d'arbre (43) étagé sont prévus dans la chambre de réception (41) ; et dans laquelle
le trou d'arbre (43) étagé comprend un trou traversant (431) de l'élément d'arrêt (42) et un trou (432) d'arbre de transmission qui est situé à une ouverture de la chambre de réception (41) et est en communication avec le trou traversant (431) de l'élément d'arrêt (42) ; et
l'agitateur (211) ou la tige (221) de vis d'extrusion est inséré dans le trou traversant (431) de l'élément d'arrêt (42) dans un état de transmission.

11. Machine à pâtes selon la revendication 10, dans laquelle le composant d'éjection (5) comprend un élément élastique (51) et un élément de poussée (52) ayant un segment de poussée (521), l'élément d'arrêt (42) est prévu dans la chambre de réception (41), le segment de poussée (521) est disposé à travers le trou traversant (431) de l'élément d'arrêt (42) et le segment de poussé (521) est limité radialement par l'élément d'arrêt (42) ; et dans lequel
un rapport d'une longueur axiale de l'élément d'arrêt (42) par rapport à une longueur axiale du segment de poussée (521) est L, dans laquelle 0,4 ≤ L ≤ 1.

12. Machine à pâtes selon la revendication 10, dans laquelle
le composant d'éjection (5) comprend un élément élastique (51) et un élément de poussée (52) ayant un segment de poussée (521), la tige (221) de vis d'extrusion ou l'agitateur (211) comprennent en outre un segment d'arbre (44) étagé allant dans le trou d'arbre (43) étagé, et le segment d'arbre (44) étagé comprend un premier segment d'arbre (441) et un deuxième segment d'arbre (442) ; dans laquelle
le premier segment d'arbre (441) et le trou traversant (431) de l'élément d'arrêt (42) sont reliés par insertion et le deuxième segment d'arbre (442) et le trou (432) d'arbre de transmission sont reliés par insertion ; et
une course de l'élément de poussée (52) est supérieur ou égal à une longueur axiale du trou (432) d'arbre de transmission et une longueur axiale du deuxième segment d'arbre (442) est supérieur ou égal à une longueur axiale du premier segment d'arbre (441).

13. Machine à pâtes selon la revendication 10, dans laquelle l'agitateur (211) disposé dans la chambre de traitement (2) est relié à la tige (221) de vis d'extrusion par insertion mutuelle, la chambre de réception (41) est située dans l'agitateur (211) ou la tige (221) de vis d'extrusion, et l'élément d'arrêt (42) fait saillie par rapport à une paroi intérieure de la chambre de réception (42) pour réaliser le trou d'arbre (43) étagé dans la chambre de réception (41).
